Europäisches Patentamt

European Patent Office

Office européen des brevets

(11) Publication number: 0 210 053
A2

# EUROPEAN PATENT APPLICATION

(21) Application number: 86305519.0

(22) Date of filing: 17.07.86

(51) Int. Cl.⁴: F16H 37/02

(30) Priority: 22.07.85 US 757551

(43) Date of publication of application:
28.01.87 Bulletin 87/05

(84) Designated Contracting States:
DE FR GB IT SE

(71) Applicant: BORG-WARNER CORPORATION
200 South Michigan Avenue
Chicago Illinois 60604(US)

(72) Inventor: Anderson, Scott Richard
728 South 6th Street
La Grange Illinois 60525(US)

(74) Representative: Williams, Trevor John et al
J.A. KEMP & CO. 14 South Square Gray's Inn
London WC1R 5EU(GB)

(54) Dual-pass continuously variable transmission with asymetric variator.

(57) A dual-pass continuously variable transmission includes an input shaft (12), an output shaft (16), gear sets forming gear trains having equal fixed ratios, and an asymmetric variator (48) having a ratio range with limits of an underdrive ratio numerically less than an overdrive ratio, which in turn is substantially equal to the fixed ratio. One-way clutches - (26,44) are engageable for establishing a first drive path from the input shaft (12) through selected gear sets (28,46) and the variator in one direction to the output shaft (16). Jaw clutches (32,38) are engageable for establishing a second drive path from the input shaft (12) through other selected gear sets - (34,40) and the variator (48) in the opposite direction to the output shaft (16). The variator ratio is varied through its range from underdrive to overdrive in the one direction. The jaw clutches (32,38) are then engaged, establishing the second drive path and causing the one-way clutches to disengage as the variator ratio is varied through its range in the opposite direction.

Fig.2.

## DUAL-PASS CONTINUOUSLY VARIABLE TRANSMISSION WITH ASYMMETRIC VARIATOR

This invention relates generally to a continuously variable transmission (CVT). More particularly, it relates to a CVT in which elements having fixed ratios are combined with an asymmetric variator having a ratio which is continuously variable within predetermined limits. The CVT provides dual drive paths through the variator.

The typical automotive transmission is shifted in descrete steps between a high-torque, low-speed mode for starting a vehicle and a high-speed, low-torque mode for vehicle operation at highway speeds. In a manual transmission shifting is accomplished by the engagement of gear sets. In an automatic transmission shifting is accomplished by the controlled engagement of friction elements. Because such shifting is in step functions, the most efficient vehicle operation can only be approximated. Automotive engineers have long recognized that efficiency would be improved if the transmission could be adjusted continuously to compensate for changing loads, speeds, etc. This would allow the engine to be operated at maximum efficiency under changing conditions.

CVTs have been known for some time. The typical CVT employs a symmetric variator comprising a variable pulley with a pair of flanges mounted on a primary shaft such that at least one of the flanges is movable axially with respect to the other. Another, similar variable pulley is mounted on a secondary shaft. A flexible belt couples the pulleys for transferring torque therebetween when the primary shaft is driven. When the pitch radius of one pulley is changed, the pitch radius of the other pulley is changed simultaneously in the opposite direction. As a result, the drive ratio between the shafts is variable in a continuous, smooth manner within the ratio range of the variator. In a symmetric variator, the limits of its ratio range are an underdrive or reduction ratio and its inverse or reciprocal overdrive ratio.

In recent years considerable work has been directed to the application of a CVT to the driveline of an automotive vehicle. In an automotive environment in particular, space constraints often dictate housing configurations, shaft center distances, pulley diameters, belt sizes, etc. Design parameters of this nature limit the ratio range and/or horsepower capacity of a CVT.

The horsepower capacity of a CVT is a function of the torque transferred through the transmission on the one hand, and the speed or linear velocity of the belt on the other hand. The maximum torque level may be varied by providing suitable gearing between the vehicle engine and the transmission input. The maximum belt speed thus becomes the limiting factor in determining the horsepower capacity of a CVT.

An important step in the development of a CVT suitable for use in an automotive vehicle is disclosed in copending U.S. Application Serial No. 564,856 filed December 23, 1983. That application is assigned to the assignee of this application, and is incorporated herein by reference. Briefly, it discloses a dual-pass CVT including an input, an output, and a symmetric variator. Gear sets establish a first drive path from the input through the variator in one direction to the output. Other gear sets establish a second drive path from the input through the variator in the opposite direction to the output. Initially torque is transferred through the first drive path as the ratio of the variator is varied from maximum underdrive to maximum overdrive. At that point the variator ratio is equal to the corresponding gear ratios such that the system is in synchronism. Simple dog clutches are engaged, and torque subsequently is transferred through the second drive path as the ratio of the variator is varied from maximum underdrive to maximum overdrive in the opposite direction.

Heretofore the design of a dual-pass CVT has included a symmetric variator; that is, one in which the variator ratio range extends from a maximum underdrive ratio to its inverse maximum overdrive ratio. In order to design such a CVT for operation at a particular transmission ratio range, the fixed ratios through the gear sets must equal the variator ratio at the point where the shift from the first drive path to the second drive path takes place, because at this point a substantially synchronous condition must obtain if the shift is to take place smoothly. When designing a dual-pass CVT with a symmetric variator, operation at any transmission ratio range less than the original range for which the transmission has been designed requires that the gear sets be changed so that this synchronous condition may be obtained. In order to provide dual-pass CVTs capable of operating at various transmission ratio ranges, it would be necessary to provide appropriate gear sets and/or belts for each particular range. Thus, there is a need in the art for a dual-pass CVT which is capable of being modified simply for operation at various transmission ratio ranges less than the maximum design ratio range without requiring different gear sets and/or belts for each.

This invention is directed to meeting this need. To that end, there is disclosed herein a dual-pass CVT including an input shaft, an output shaft, and first and second intermediate shafts. First drive means engages the input and first intermediate shafts and includes a one-way clutch allowing the first intermediate shaft to overrun. Second drive means is provided for engaging the input and second intermediate shafts. Third drive means is provided for engaging the first intermediate and output shafts. Fourth drive means engages the second intermediate and output shafts and includes another one-way clutch allowing the fourth drive means to overrun. An asymmetric variator engages the inter mediate shafts. The first and fourth drive means establish a first drive path from the input shaft through the first drive means, first intermediate shaft, variator, second intermediate shaft, and fourth drive means to the output shaft. The second and third drive means when engaged establish a second drive path from the input shaft through the second drive means, second intermediate shaft, variator, first intermediate shaft, and third drive means to the output shaft. The variator is asymmetric in that the maximum overdrive ratio of the variator is not the inverse of its maximum underdrive ratio. Rather, the underdrive ratio limit is numerically less than the overdrive ratio limit.

The objects and advantages of this invention will become apparent to those skilled in the art upon careful consideration of the specification herein, including the drawings, wherein:

FIGURES 1a, b, c and d are schematic illustrations of the operating sequence of the dual-pass CVT of this invention;

FIGURE 2 is a sectional view showing details of the dual-pass CVT of this invention;

FIGURE 3 is a graph showing the operating characteristics of a conventional dual-pass CVT with a symmetric variator; and

FIGURE 4 is the graph showing the operating characteristics of the dual-pass CVT of this invention with an asymmetric variator.

While this invention is susceptible of embodiment in many different forms, the preferred embodiment is shown in the drawings and described in detail. It should be understood that the present disclosure is considered to be an exemplification of the principles of the invention, and is not intended to limit the invention to this embodiment.

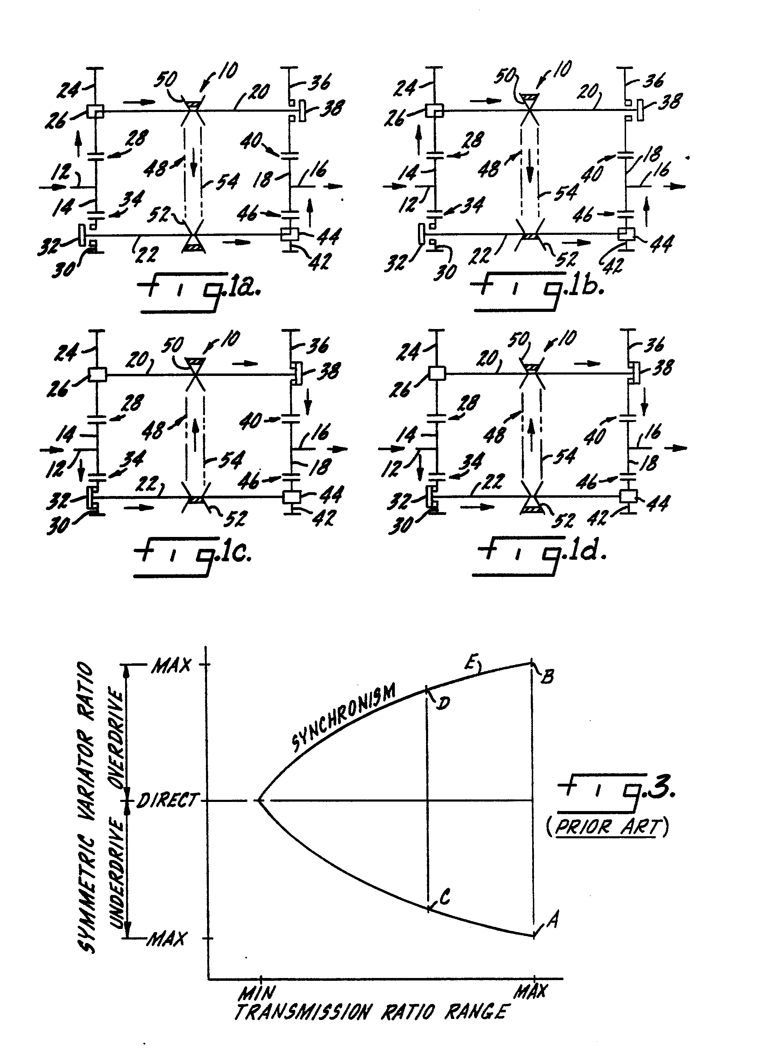

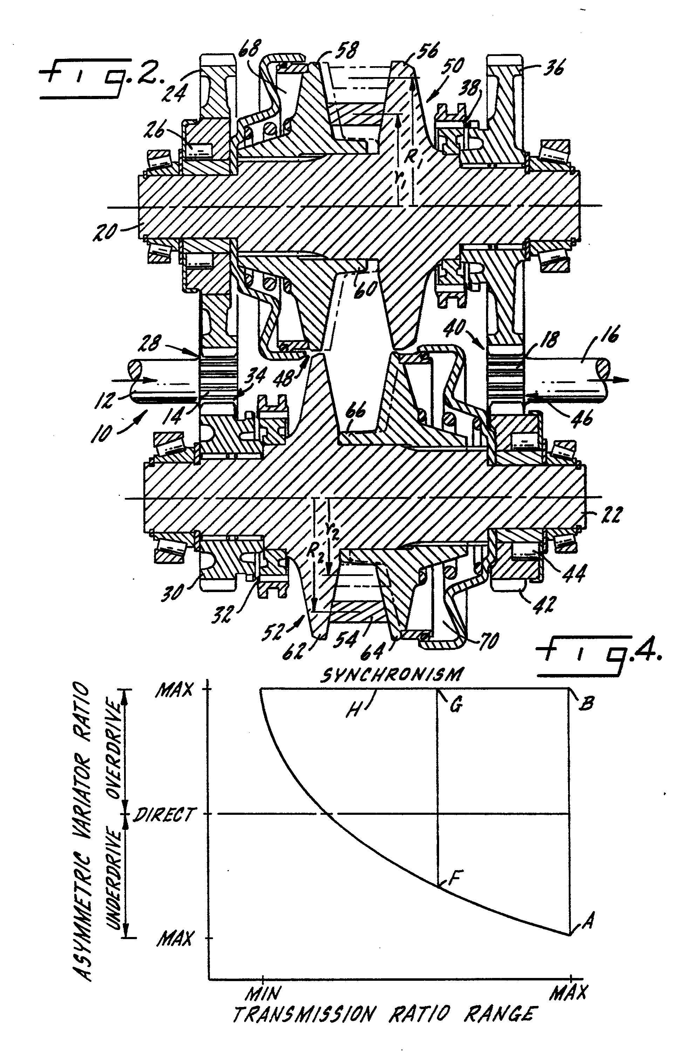

Referring now to FIGURES 1a, b, c and d and FIGURE 2 in greater detail, the preferred embodiment of this invention incorporates a dual-pass CVT 10 including an input shaft 12 adapted to receive torque from a power source, for example the engine of an automotive vehicle. An input drive gear 14 with $T_i$ teeth is secured to shaft 12. CVT 10 also includes an output shaft 16 adapted to direct torque to a load, for example the drive axle of an automotive vehicle. An output driven gear 18 with $T_o$ teeth is secured to shaft 16. Gear 14 should be designed to mate CVT 10 to the particular engine with which it is to be used, and gear 18 should be designed to mate CVT 10 to the vehicle driveline. Design considerations will determine the number of teeth which these two gears have. For simplicity it will be assumed that $T_i = T_o$.

CVT 10 also includes first and second intermediate shafts 20 and 22 respectively.

A first, driven gear 24 with T teeth is secured to the outer race of a one-way clutch 26, the inner race of which is secured to shaft 20. One-way clutch 26 is oriented such that shaft 20 may overrun gear 24. Gear 14, gear 24 and clutch 26 together constitute first drive means 28 for transferring torque from shaft 12 to shaft 20. Gear set 24-14 has a first, fixed ratio T/Ti.

A second, driven gear 30 with t teeth is journalled on shaft 22. A jaw clutch 32 or the like may be engaged to lock gear 30 to shaft 22. Gear 14, gear 30 and clutch 32 together constitute second drive means 34 for transferring torque from shaft 12 to shaft 22. Gear set 30-14 has a second, fixed ratio t/Ti.

A third, drive gear 36 with T teeth is journalled on shaft 20. Another jaw clutch 38 or the like may be engaged to lock shaft 20 to gear 36. Clutch 38, gear 36 and gear 18 together constitute third drive means 40 for transferring torque from shaft 20 to shaft 16. Gear set 18-36 has a third, fixed ratio To/T.

A fourth, drive gear 42 with t teeth is secured to the outer race of another one-way clutch 44, the inner race of which is secured to shaft 22. One-way clutch 44 is oriented such that gear 42 may overrun shaft 22. Clutch 44, gear 42 and gear 18 together constitute fourth drive means 46 for transferring torque from shaft 22 to shaft 16. Gear set 18-42 has a fourth, fixed ratio To/t.

Once again, design considerations will determine whether these four drive means provide underdrive or overdrive. For example, if CVT 10 is to be used in a passenger automobile with a gasoline engine, it may be assumed that drive means 28 and 46 provide underdrive, and that drive means 34 and 40 provide overdrive. With this assumption, gear set 24-14 has an underdrive ratio T/Ti, and gear set 30-14 has an overdrive ratio t/Ti. Thus the ratio through a gear train comprising gears 24,14 and 30 (from shaft 20 to shaft 22) is $t/Ti \times 1/(T/Ti)$ = t/T overdrive. In the opposite direction the ratio is T/t underdrive.

Similarly, gear set 18-36 has an overdrive ratio To/T, and gear set 18-42 has an underdrive ratio To/t. Thus the ratio through a gear train comprising gears 42,18 and 36 (from shaft 22 to shaft 20) is $T/To \times (t/To) = T/t$ underdrive. In the opposite direction the ratio is $t/T$ overdrive.

In summary, it is assumed that gears 14 and 18, gears 24 and 36, and gears 30 and 42 have equal numbers of teeth $Ti = To$, $T$, and $t$ respectively. It is important to remember, however, that this may be modified so long as the ratios through the gear trains (from one intermediate shaft to the other) are equal. Based upon the assumptions noted above, the ratios from shaft 20 to shaft 22 will be overdrive ratios. Obviously the ratios from shaft 22 to shaft 20 will be underdrive ratios. Gear sets preferably provide these ratios, as it is believed that gearing allows maximum design flexibility with a particular advantage being that gear 14 is a common drive gear. Given this advantage, simply by changing the number of teeth in gear 14 the designer could easily provide gear sets with other ratio relationships if CVT 10 were to be used, for example, in an agricultural tractor with a Diesel engine, or in a sports car with a high-speed engine.

An asymmetric variator 48 couples shafts 20 and 22. Variator 48 includes a variable pulley 50 on shaft 20 and another variable pulley 52 on shaft 22. Pulleys 50 and 52 are continuously variable respectively between maximum pitch radii $R_1$ and $R_2$, and minimum pitch radii $r_1$ and $r_2$. A suitable belt 54 or the like couples pulleys 50 and 52.

As is well known in the art, the pitch radii of pulleys 50 and 52 may be varied such that the ratio of speed mechanism 48 is continuously variable within a range having predetermined limits. These limits should provide a fifth, underdrive ratio $R_2/r_1$, and a sixt, overdrive ratio $r_2/R_1$ substanially equal to the overdrive ratio $t/T$.

With particular reference to FIGURE 2, pulley 50 includes a fixed flange 56 rotatable with shaft 20 and a slidable flange 58 having a hub 60 rotatable with and slidable relative to shaft 20. As shown in solid lines, flange 58 is in its distal position relative to flange 56. In this position pulley 50 develops its minimum pitch radius $r_1$. As shown in dashed lines, flange 58 is in its proximal position, with hub 60 abutting flange 56. In this position pulley 50 develops its maximum pitch radius $R_1$.

Pulley 52 is similar to pulley 50, and includes a fixed flange 62 rotatable with shaft 22 and a slidable flange 64 having a hub 66 rotatable with and slidable relative to shaft 22. As shown in solid lines, flange 64 is in its proximal position relative to flange 62, with hub 66 abutting flange 62. This determines the maximum pitch radius $R_2$ of pulley 52. As shown in dashed lines, flange 64 is in its distal position, which determines the minimum pitch radius $r_2$ of pulley 52.

Hub 66 is longer than hub 60. Thus the maximim pitch radius $R_2$ is smaller than the maximum pitch radius $R_1$, and the minimum pitch radius $r_1$ is larger than the minimum pitch radius $r_2$. In other words, the fifth, underdrive ratio $R_2/r_1$ is numerically less than the sixth, overdrive raio $r_2/R_1$. Variator 48 is asymmetric.

With flanges 58 and 64 in their solid line positions, the maximum underdrive ratio through variator 48 (from shaft 20 to shaft 22) is $R_2/r_1$. With flanges 58 and 64 in their dashed line positions, the maximum overdrive ratio through variator 48 - (from shaft 20 to shaft 22) is $r_2/R_1$. Thus the ratio range of variator 48 is from $R_2/r_1$ underdrive to $r_2/R_1$ overdrive. The same range is obtained in the opposite direction (from shaft 22 to shaft 20). In other words, in either direction the total change in the ratio of variator 48 is numerically equal to $(R_2/r_1) \times - (R_1/r_2)$.

Suitable means (not shown) is provided for directting fluid to and from chambers 68 and 70 in order to slide flanges 58 and 64 respectively, and thus to vary the pitch radii of pulleys 50 and 52 between their predetermined minimum and maximum limits.

The sequence of events for an upshift begins after an associated starting clutch (not shown but preferably on the output side CVT 10) is engaged. A first drive path is established from shaft 12 through drive means 28, shaft 20, variator 48, shaft 22 and drive means 46 to shaft 16. (See the arrows in FIGURE 1a.) Gear 30 is rotating faster than shaft 22, with clutch 32 disengaged. Similarly, gear 36 is rotating slower than shaft 20, with clutch 38 disengaged. At this point CVT 10 provides underdrive from shaft 12 to shaft 16.

Variator 48 now shifted continuously through its ratio range from $R_2/r_1$ underdrive (FIGURE 1a) to $r_2/R_1$ overdrive (FIGURE 1b). This results in a continuous, smooth increase in the output speed at shaft 16 numberically equal to $(R_2/r_1) \times (R_1/r_2)$. At the end of the first pass through variator 48, $r_2/R_1$ must be substantially equal to $t/T$.

Based upon the assumptions noted above, at this point CVT 10 provides direct drive from shaft 12 to shaft 16. Shaft 22 is in substantial synchronism with gear 30, and shaft 20 is in substantial synchronism with gear 36. If desired, suitable sensors may be provided for transmitting appropriate torque and/or speed signals to control apparatus - (not shown) which causes clutches 32 and 38 to be engaged. However clutches 32 and 38 are enagaged, it should be noted that no synchronizers are required.

When clutches 32 and 38 are engaged, a second drive path is established from shaft 12 through drive means 34, shaft 22, variator 48, shaft 20 and drive means 40 to shaft 16. (See arrows in FIGURE 1c.) CVT 10 still provides direct drive from shaft 12 to shaft 16.

CVT 10 is conditioned such that when variator 48 is shifted in the opposite direction, one-way clutches 26 and 44 disenage automatically, allowing shaft 20 to overrun gear 24, and allowing gear 42 to overrun shaft 22. Thus a smooth changeover from the first drive path to the second drive path is achieved simply and easily.

Variator 48 now is shifted in the opposite direction continuously through its ratio range from $R_1/r_2$ underdrive (FIGURE 1c) to $r_1/R_2$ overdrive (FIGURE 1d). This results in an additional continous, smooth increase in the output speed at shaft 16 numerically equal to $(R_1/r_2) \times (R_2/r_1)$. Thus at the end of the second pass through speed mechanism 48, the total change in the ratio of CVT 10 will be numerically equal to $[(R_2/r_1) \times (R_1/r_2)] \times [(R_1/r_2) \times (R_2/r_1)] = (R_1/r_2)^2 \times (R_2/r_1)^2$.

At this point CVT 10 provides overdrive from shaft 12 to shaft 16. One operating cycle (two passes through variator 48) has been completed. Belt 54 is in its initial, starting position, with pulleys 50 and 52 rotating at correspondingly higher speeds.

In the aforementioned U. S. Application Serial No. 564,856 it is noted that the ratio of CVT 10 is at its maximum when $R_1$ and $R_2$ are as large as possible and $r_1$ and $r_2$ are as small as possible. In this invention, by reducing the maximum underdrive ratio $R_2/r_1$ of asymmetric variator 48, the transmission ratio range of CVT 10 is reduced without changing the gears. Further, assuming that the center distance between pulleys 50 and 52 remains unchanged, no increase in the length of belt 54 is required in order to reduce the transmission ratio range. The designer has wide latitude in establishing the parameters which will optimize the transmission ratio range/torque capacity/ belt speed relationship so long as the maximum overdrive ratio remains substantially equal to the corresponding ratios through the gears, as substantial synchronism must obtain at the point where the shift takes place.

The graphs of FIGURES 3 and 4 emphasize the distinction between a conventional dual-pass CVT with a symmetric variator and the dual-pass CVT of this invention with an asymmetric variator.

With the symmetric variator of FIGURE 3, at the maximum transmission ratio range, the maximum variator underdrive ratio A is numerically equal to the maximum variator overdrive ratio B. Similarly, for any otner transmission ratio range, the maximum variator underdrive ratio C will be numerically equal to its maximum overdrive ratio D. Synchronism takes place along line E. But in order for synchronism to obtain, the ratios through the gear trains must equal the maximum overdrive variator ratio. Thus, for each transmission ratio range different gear sets must be provided. In addition, for smaller ranges a longer belt also must be provided if the center distance between the pulleys remains unchanged.

With the asymmetric variator shown in FIGURE 4, at the maximum transmission ratio range, the maximum variator underdrive ratio A is numerically equal to the maximum variator overdrive ratio B. At this maximum transmission ratio range, the asymmetric variator operates as a symmetric variator. However, for any transmission ratio range less than this, the maximum underdrive ratio F is numerically less than the maximum overdrive ratio G. By maintaining the maximum overdrive ratio of the variator constant, synchronism obtains along line H. Thus, for any transmission ratio range, the same gears may be used. Similarly, the same belt may be used when the pulley center distance remains unchanged.

By using an asymmetric variator in a dual-pass CVT, the maximum underdrive ratio may be designed to be numerically equal to or less than the maximum overdrive ratio. This allows for modification of the CVT for use in an environment where any transmission ratio range equal to or less than the maximum design transmission ratio range is desired. The modification is simple, requiring only that the hub of the sliding pulley flanges be of appropriate length to provide the desired underdrive and overdive ratio limits for whatever transmission ratio range is desired. Alternatively, these limits could be provided by suitably controlling the actuating system for the sliding pulley flanges.

## Claims

1. A dual-pass continuously variable transmission (10) comprising rotatable input (12) and output shafts (16), first (20) and second (22) rotatable intermediate shafts, first drive means (28) engaging said input shaft with said first intermediate shaft, said first drive means including a one-way clutch - (26) allowing said first intermediate shaft to overrun, second drive means (34) for engaging said input shaft with said second intermediate shaft, third drive means (40) for engaging said first intermediate shaft with said output shaft, fourth drive means (46) engaging said second intermediate shaft with said output shaft, said fourth drive means including another one-way clutch (44) allowing said fourth drive means to overrun, and an asymmetric variator (48) engaging said intermediate shafts, said first (28) and fourth (46) drive means establishing a first drive path from said input shaft (12) through said first drive means, first intermediate shaft, variator, second intermediate shaft and fourth drive means to said output shaft, and said second (34) and third ( 40) drive means when engaged establishing a second drive path from said input shaft - (12) through said second drive means, second intermediate shaft, variator, first intermediate shaft and third drive means to said output shaft (16), said first (28), second (34), third (40) and fourth (46) drive means respectively having first, second, third and fourth drive ratios, the product of said first ratio and the inverse of said second ratio being equal to the product of said fourth ratio and the inverse of said third ratio, and said variator (48) having a ratio range with limits of fifth and sixth drive ratios, said fifth ratio being less than said product, and said sixth ratio being substantially equal to the inverse of said product.

2. The dual-pass continuously variable transmission of claim 1, said first and fourth ratios being underdrive ratios, and said second and third ratios being overdrive ratios.

3. The dual-pass continuously variable transmission of claim 2, said underdrive ratios being equal, and said overdrive ratios being equal.

4. The dual-pass continuously variable transmission of claim 1, said first (28) and second (34) drive means respectively including first (24,14) and second (30,14) gear sets having a common drive gear (14) driven by said input shaft (12).

5. The dual-pass continuously variable transmission of claim 1, said third (40) and fourth (46) drive means respectively including third (18,36) and fourth (18,42) gear sets having a common driven gear (18) driving said output shaft (16).

6. The dual-pass continuously variable transmission of claim 4, said third and fourth drive means respectively including third and fourth gear sets having a common driven gear driving said output shaft.

7. The dual-pass continuously variable transmission of claim 1, said one-way clutch (26) engaging the driven gear (24) of said first gear set (28) with said first intermediate shaft (20), a jaw clutch - (32) engaging the driven gear (30) of said second gear set (34) with said second intermediate shaft - (22), another jaw clutch (38) engaging said first intermediate shaft (20) with the drive gear (36) of said third gear set (40), and said other one-way clutch (44) engaging said second intermediate shaft (22) with the drive gear (42) of said fourth gear set (46).

8. The dual-pass continuously variable transmission of claim 7, said variator (48) including a variable pulley (50) rotatable with said first intermediate shaft (20), another variable pulley (52) rotatable with said second (22) intermediate shaft, and a belt (54) coupling said pulleys, each of said pulleys including a fixed flange rotatable with its associated intermediate shaft, and another flange rotatable with and slidable relative to its associated intermediate shaft between proximal and distal positions relative to its associated fixed flange, the distal position of the slidable flange of said pulley and the proximal position of the slidable flange of said other pulley determining one of said limits, and the proximal position of the slidable flange of said pulley and the distal position of the slidable flange of said other pulley determining the other of said limits, said limits being such that said fifth ratio is numerically less than said sixth ratio.

9. A dual-pass continuously variable transmission comprising rotatable input (12) and output shafts (16), first (20) and second (22) rotatable intermediate shafts, first (28) and second (34) drive means for engaging said input shaft with said first - (20) and second (22) intermediate shafts respectively, said first (28) and second (34) drive means having a driven relationship with said input shaft - (12), third (40) and fourth (46) drive means for engaging said first (20) and second (22) intermediate shafts respectively with said output shaft (16), said third (40) and fourth (46) drive means having a driving relationship with said output shaft (16), and an asymmetric variator (48) engaging said intermediate shafts (20,22), said first (28) and fourth drive (46) means when engaged establishing a first drive path from said input shaft (12) through said first drive means, first intermediate shaft, variator, second intermediate shaft and fourth drive means to said output shaft (16), and said second (34) and third (40) drive means when engaged establishing a second drive path from said input shaft through said second drive means, second intermediate shaft, variator, first intermediate shaft and third drive means to said output shaft (16), said first (28), second (34), third (40) and fourth (46) drive means respectively having first, second, third and fourth drive ratios, the product of said first ratio and the inverse of said second ratio being equal to the product of said fourth ratio and the inverse of said third ratio, and said variator having a ratio range with limits of fifth and sixth drive ratios, said fifth ratio being less than said product, and said sixth ratio being substantially equal to the inverse of said product.

10. A dual-pass continuously variable transmission comprising rotatable input (12) and output - (16) shafts; first (20) and second (22) rotatable intermediate shafts; an asymmetric variator (48); drive means for completing a first drive path including, in order, said input shaft (12), first intermediate shaft (20), variator (48), second intermediate (22) shaft, and output shaft (16); and other drive means for completing a second drive path including, in order, said input shaft (12), second intermediate shaft (22), variator (48), first intermediate (20) shaft, and output shaft (16); said variator (48) being constructed and arranged such that in said first drive path it provides a ratio that is variable from a first limit to a second limit, said first limit being numerically equal to or less than said second limit.

11. The dual-pass continuously variable transmission of claim 10, said first limit being an underdrive limit, and said second limit being an overdrive limit.

Fig.1a.

Fig.1b.

Fig.1c.

Fig.1d.

Fig.3.
(PRIOR ART)

Fig.2.

Fig.4.

SYNCHRONISM

ASYMMETRIC VARIATOR RATIO

UNDERDRIVE  OVERDRIVE

MAX

DIRECT

MAX

MIN                                                    MAX

TRANSMISSION RATIO RANGE